# EUROPEAN PATENT SPECIFICATION

(11) **EP 3 614 610 B1**
(45) Date of publication and mention of the grant of the patent: **07.07.2021**
(21) Application number: 18802173.7
(22) Date of filing: 16.05.2018
(51) Int. Cl.: H04L 5/00, H04L 5/02, H04W 72/04

(54) **FREQUENCY DOMAIN RESOURCE PROCESSING METHOD, DEVICE AND SYSTEM**
VERFAHREN, VORRICHTUNG UND SYSTEM ZUR VERARBEITUNG VON FREQUENZBEREICHSRESSOURCEN
PROCÉDÉ, DISPOSITIF, ET SYSTÈME DE TRAITEMENT DE RESSOURCES DE DOMAINE DE FRÉQUENCE

(30) Priority: 18.05.2017 CN 201710354194
(43) Date of publication of application: 26.02.2020
(73) Proprietor: Huawei Technologies Co., Ltd., Longgang District Shenzhen, Guangdong 518129 (CN)
(72) Inventor: LI, Hua, Shenzhen Guangdong 518129 (CN); TANG, Hao, Shenzhen Guangdong 518129 (CN); TANG, Zhenfei, Shenzhen Guangdong 518129 (CN); WANG, Fan, Shenzhen Guangdong 518129 (CN)
(74) Representative: Gill Jennings & Every LLP
(86) International application number: PCT/CN2018/087043
(87) International publication number: WO 2018/210254

(56) References cited:
- EP-A1- 2 360 866
- CN-A- 102 752 861
- JP-B2- 5 150 006
- US-A1- 2013 148 535
- US-A1- 2016 381 690
- "Efficient Wider Bandwidth Operations for NR", 3GPP TSG RAN WG1 Meeting #89 R1-1707828, 7 May 2017 (2017-05-07), XP051263128,
- HUAWEI: "On Bandwidth Part and Bandwidth Adaptation", 3GPP TSG RAN WG1 Meeting #89 R1-1706900, 6 May 2017 (2017-05-06), XP051261558,

## Description

### TECHNICAL FIELD

Embodiments of this application relate to the field of communications technologies, and in particular, to a frequency domain resource processing method, an apparatus, and a system.

### BACKGROUND

The development of wireless communications technologies has resulted in growing quantities of wireless network users, growing services supported by a wireless network, and growing requirements on spectrum resources. However, spectrum resources are limited. Therefore, it is particularly important to efficiently use the limited spectrum resources.

EP 2 360 866 A1 discloses a method for (de)activating downlink component carriers in a mobile communication system using component carrier aggregation.

JP 5 150006 B2 discloses a mobile communication system and mobile communication capable of transmitting and receiving control information in HARQ with high quality when a base station device and a mobile station device communicate using a wide frequency band composed of a plurality of component carriers.

### SUMMARY

Embodiments of this application provide a frequency domain resource processing method, an apparatus, and a system, to increase spectrum resource utilization.

According to a first aspect, a frequency domain resource processing method is provided. The method is performed by a radio access network (RAN) node, and includes: configuring, by the RAN node, a plurality of frequency domain resources for a terminal, wherein the plurality of frequency domain resources are in a first frequency domain resource group configured by the RAN node for the terminal; sending, by the RAN node, first information to the terminal, where the first information is carried on a physical downlink control channel (PDCCH), the first information includes a plurality of information bits and a group identifier of the first frequency domain resource group, the plurality of information bits correspond to the plurality of frequency domain resources respectively, and the information bits in the first information are used to instruct to activate or deactivate the frequency domain resources corresponding to the information bits; and instructing, by the RAN node, at a time, to activate or deactivate the plurality of frequency domain resources in the first frequency domain resource group based on the group identifier.

Correspondingly, a frequency domain resource processing method is further provided. The method is performed by a terminal, and includes: receiving, by the terminal, configuration information from a RAN node, where the configuration information is used to configure a plurality of frequency domain resources for the terminal and wherein the plurality of frequency domain resources are in a first frequency domain resource group configured by the RAN node for the terminal; receiving, by the terminal, first information from the RAN node, where the first information is carried on a PDCCH, the first information includes a plurality of information bits and a group identifier of the first frequency domain resource group, the plurality of information bits correspond to the plurality of frequency domain resources respectively, and the information bits in the first information are used to instruct to activate or deactivate the frequency domain resources corresponding to the information bits; and making, by the terminal based on the first information, a frequency domain resource enter a state indicated by a corresponding information bit or maintain a state indicated by a corresponding information bit; wherein the RAN node instructs, at a time, to activate or deactivate the plurality of frequency domain resources in the first frequency domain resource group.

In the foregoing methods, the RAN node activates or deactivates a frequency domain resource by using physical layer information. Compared with a manner of activating a carrier by using a MAC layer information element, this saves time for parsing the MAC information element. In addition, the corresponding plurality of information bits are respectively configured for the plurality of frequency domain resources, to instruct to activate or deactivate the corresponding frequency domain resources respectively. In this way, the plurality of frequency domain resources can be processed by sending only a piece of information. This improves frequency domain resource processing efficiency, and further increases frequency domain resource utilization.

In an implementation, the RAN node may group frequency domain resources supported by the terminal into at least one group. The RAN node instructs, at a time, to activate or deactivate frequency domain resources in one group, without separately instructing to activate or deactivate all the frequency domain resources. This reduces overheads of the first information, thereby saving air interface resources. For example, the plurality of frequency domain resources are a plurality of frequency domain resources in a first frequency domain resource group configured by the RAN node for the terminal. In this case, the first information further includes a group identifier of the first frequency domain resource group.

Optionally, the first information may be terminal-level control information. In this way, the RAN node does not need to indicate a position of control information of the terminal to the terminal, thereby saving signaling. For example, the first information is scrambled by using a first identifier. The first identifier is used to indicate that the first information is specific to the terminal and that the first information is used to activate or deactivate a frequency domain resource. The first identifier may be a preset radio network temporary identifier (RNTI), and is used to indicate that the information scrambled by using the first identifier is specific to the terminal and that the information is used to activate or deactivate a frequency domain resource.

In an implementation, the RAN node sends indication information to the terminal, where the indication information is used to indicate a time domain position of a response message for the first information. This can improve system reliability. In this case, the terminal receives the indication information from the RAN node. The indication information is used to indicate the time domain position of the response message for the first information. The terminal feeds back, at the time domain position, the response message for the first information to the RAN node.

Optionally, when a deactivated frequency domain resource exists, the terminal feeds back, at the time domain position, the response message for the first information to the RAN node. In this case, a feedback is provided only for deactivation, thereby improving deactivation reliability and avoiding a waste of resources.

Optionally, the first information and the indication information are carried in a same piece of information, for example, downlink control information (DCI).

Optionally, the frequency domain resources are secondary component carriers (SCC) or bandwidth parts (BP).

According to a second aspect, a frequency domain resource processing apparatus is further provided. The apparatus is used for a RAN node and includes units or means (means) for performing the steps performed by the RAN node in any implementation of the first aspect.

According to a third aspect, this application provides a computer storage medium, wherein the computer storage medium stores a computer program (or instruction). When invoked by a processing element, the program is configured to perform the method performed by the RAN node or the terminal in any implementation of the first aspect.

### BRIEF DESCRIPTION OF DRAWINGS

FIG. 1 is a schematic diagram of a communication scenario according to an embodiment of this application;
FIG. 2 is a schematic structural diagram of an activation/deactivation MAC control element in the prior art;
FIG. 3 is a schematic diagram of a BP according to an embodiment of this application;
FIG. 4 is a schematic diagram of a frequency domain resource processing method according to an embodiment of this application;
FIG. 5 is a schematic diagram of one type of control information according to an embodiment of this application;
FIG. 6 is a schematic diagram of another type of control information according to an embodiment of this application;
FIG. 7 is a schematic diagram of still another type of control information according to an embodiment of this application;
FIG. 8 is a schematic diagram of a BP processing method according to an embodiment of this application;
FIG. 9 is a schematic diagram of a frequency domain resource processing apparatus according to an embodiment of this application;
FIG. 10 is a schematic diagram of another frequency domain resource processing apparatus according to an embodiment of this application;
FIG. 11 is a schematic structural diagram of a RAN node according to an embodiment of this application; and
FIG. 12 is a schematic structural diagram of a terminal according to an embodiment of this application.

### DESCRIPTION OF EMBODIMENTS

The following describes some terms in embodiments of this application to facilitate understanding of a person skilled in the art.
(1) A terminal is also referred to as user equipment (User Equipment, UE), a mobile station (mobile station, MS), a mobile terminal (mobile terminal, MT), or the like, and is a device that provides a user with voice and/or data connectivity, for example, a handheld device or an in-vehicle device with a wireless connection function. Currently, some examples of the terminal include: a mobile phone (mobile phone), a tablet computer, a notebook computer, a palmtop computer, a mobile Internet device (mobile Internet device, MID), a wearable terminal, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).
(2) A radio access network (radio access network, RAN) is a part, in a network, that connects a terminal to a wireless network. A RAN node (or device) is a node (or a device) in the radio access network, and may also be referred to as a base station. Currently, some examples of the RAN node include: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), or a wireless fidelity (wireless fidelity, Wi-Fi) access point (access point, AP). In addition, in a network structure, the RAN may include a centralized unit (centralized unit, CU) node and a distributed unit (distributed unit, DU) node. In this structure, protocol layers of an eNB in a long term evolution (long term evolution, LTE) system are split, where functions of some protocol layers are controlled by a CU in a centralized manner, functions of part or all of remaining protocol layers are distributed in a DU, and the CU controls the DUs in a centralized manner.
(3) "A plurality of" means two or more, and another quantifier is similar to this. The term "and/or" describes an association relationship between associated objects and represents that three relationships may exist. For example, A and/or B may represent the following three cases: Only A exists, both A and B exist, and only B exists. The character "/" usually indicates an "or" relationship between the associated objects.

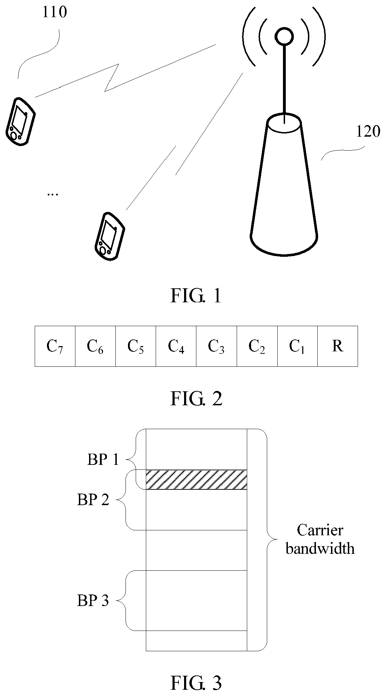

FIG. 1 is a schematic diagram of a communication scenario according to an embodiment of this application. As shown in FIG. 1, a terminal 110 accesses a wireless network through a RAN node 120, to obtain a service from an external network (for example, the Internet) over the wireless network or communicate with another terminal over the wireless network.

In a carrier aggregation (carrier aggregation, CA) technology, the terminal 110 may support aggregation of a plurality of component carriers (component carriers, CCs), to obtain larger bandwidth. The plurality of aggregated CCs include one primary component carrier (PCC) and at least one secondary component carrier (SCC). A cell corresponding to the PCC is a primary cell (PCell), and a cell corresponding to the SCC is referred to as a secondary cell (SCell). For example, in FIG. 1, the terminal 110 initially accesses a cell of a RAN node 120. The cell is responsible for radio resource control (radio resource control, RRC) communication with the terminal 110, and is a PCell. A corresponding carrier is a PCC. During RRC connection reconfiguration, the RAN node 120 may add at least one SCell (or SCC) for the terminal 110. The added SCell may be a cell of the RAN node 120, or may be a cell of another RAN node. No limitation is set herein. Furthermore, in addition to adding the SCell for the terminal during the RRC connection reconfiguration, the RAN node 120 may further modify or release an SCell for the terminal during the RRC connection reconfiguration.

A process in which the RAN node adds/modifies/releases an SCell for the terminal may be referred to as an SCell configuration process or an SCC configuration process. In the SCell configuration process, the RAN node may configure N SCells (or SCCs) for the terminal, where N is a positive integer. Activation/Deactivation control is not performed on a PCell (or PCC), while an SCell (or SCC) may be activated/deactivated. For example, the N SCells (or SCCs) may be activated/deactivated through a media access control (media access control, MAC) layer.

Currently, a MAC layer information element that controls SCell activation/deactivation is an activation/deactivation MAC control element (Activation/Deactivation MAC CE). A format of the activation/deactivation MAC CE is shown in FIG. 2. The activation/deactivation MAC control element has a byte with 8bits, and Cᵢ corresponds to an activation/deactivation status of an SCell whose index is set to i, where i is a positive integer and is an index (index) of the configured SCell. If Cᵢ is set to 1, it indicates that the corresponding SCell is activated. If Cᵢ is set to 0, it indicates that the corresponding SCell is deactivated. R is a reserved bit.

In another manner, the terminal may maintain a deactivation timer (SCell deactivation timer) for each SCell. Within a time period specified by a deactivation timer, if the terminal does not receive information on a data channel or a control channel in a corresponding SCell in a downlink direction, the SCell is deactivated; and if the terminal does not perform transmission on a data channel or a control channel in a corresponding SCell in an uplink direction, the SCell is deactivated.

When the terminal receives an SCell activation command in a subframe n, the terminal initiates a corresponding activation operation in a subframe n+8. When the terminal receives a deactivation command or an SCell deactivation timer expires in a subframe n, the terminal initiates a corresponding deactivation operation in a subframe n+8.

It can be seen that when a MAC CE is used to activate/deactivate a carrier, a specific period of time is required for parsing the MAC information element. This results in a specific delay and cannot meet rapid service volume changes. For example, in case of a burst service, data transmission needs to be completed in a short period of time. In this case, a MAC CE manner increases a delay, and cannot meet a short delay requirement of the service. Therefore, a rapid carrier activation/deactivation method is needed urgently, to meet the short delay requirement of the service.

In addition, as wireless communications technologies evolve, in a fifth-generation (5G) mobile communications technology, also referred to as a new radio (New Radio, NR) access technology, a carrier bandwidth may be greater than a bandwidth capability of the terminal. As a result, the RAN node cannot directly allocate a frequency domain resource to the terminal in the carrier bandwidth. For example, a maximum bandwidth of one carrier can reach 400 MHz, but a bandwidth capability, for example, 20 MHz, of the terminal may be less than the maximum bandwidth. Therefore, limited by the bandwidth capability of the terminal, the RAN node cannot directly allocate a frequency domain resource to the terminal in the carrier bandwidth. The carrier bandwidth is a bandwidth of one carrier, and the bandwidth capability of the terminal is a maximum bandwidth that can be supported by the terminal.

To allocate a frequency domain resource to the terminal when the carrier bandwidth is greater than the bandwidth capability of the terminal, the following frequency domain resource allocation manner is proposed:

First, a bandwidth part (bandwidth part, BP) is allocated to the terminal in the carrier bandwidth. In other words, the BP allocated to the terminal is indicated to the terminal. Then, a frequency domain resource is allocated to the terminal in the BP, where the frequency domain resource is, for example, a physical resource block (physical resource block, PRB). For example, the PRB, in the BP, allocated to the terminal is indicated to the terminal.

The following describes a BP with reference to FIG. 3. A BP is some frequency domain resources that are allocated by a RAN node to a terminal in a carrier bandwidth. A size of the BP is less than or equal to a bandwidth capability of the terminal, that is, a maximum bandwidth supported by the terminal. In addition, the BP may be contiguous frequency domain resources. For example, the BP may include a plurality of contiguous subcarriers. For another example, the BP may include a plurality of contiguous PRBs. Alternatively, the BP may be non-contiguous frequency domain resources. The contiguous frequency domain resources help reduce resource allocation complexity, and the non-contiguous frequency domain resources help utilize discrete resources. The terminal may support a plurality of BPs. In other words, the RAN node may configure the plurality of BPs for the terminal. In FIG. 3, three BPs are used as an example, but are not intended to limit a quantity of BPs configured by the RAN node for the terminal. The quantity may be 1 or greater than 1. When a plurality of BPs are configured, the BPs may overlap each other. For example, a BP 1 and a BP 2 have an overlapping part shown by an oblique line-shaded area. Alternatively, the BPs may not overlap each other, for example, the BP 2 and a BP 3. In addition, subcarrier spacings of frequency domain resources included in different BPs may be the same or may be different. A subcarrier spacing is a frequency domain length of a resource element (resource element, RE). A value of the subcarrier spacing may be, for example, 15 kHz, 30 kHz, or 60 kHz.

Currently, the RAN node may configure a plurality of BPs for the terminal. However, a technology for activating or deactivating the BPs configured by the RAN node for the terminal is unavailable.

In view of this, an embodiment of this application provides a frequency domain resource processing method, to rapidly activate/deactivate a plurality of frequency domain resources, for example, carriers or BPs, configured by a RAN node for a terminal, thereby increasing spectrum resource utilization. In this method, the RAN node activates or deactivates a frequency domain resource by using physical layer information. Compared with a manner of activating a carrier by using a MAC layer information element, this saves time for parsing the MAC information element, so that a corresponding activation or deactivation operation can be initiated in n+x, where x is a natural number less than 8, for example, n+0 or n+1. In addition, a plurality of corresponding information bits are respectively configured for the plurality of frequency domain resources, to instruct to activate or deactivate the corresponding frequency domain resources respectively. In this way, the plurality of frequency domain resources can be processed by sending only a piece of information. This improves frequency domain resource processing efficiency, and further increases frequency domain resource utilization.

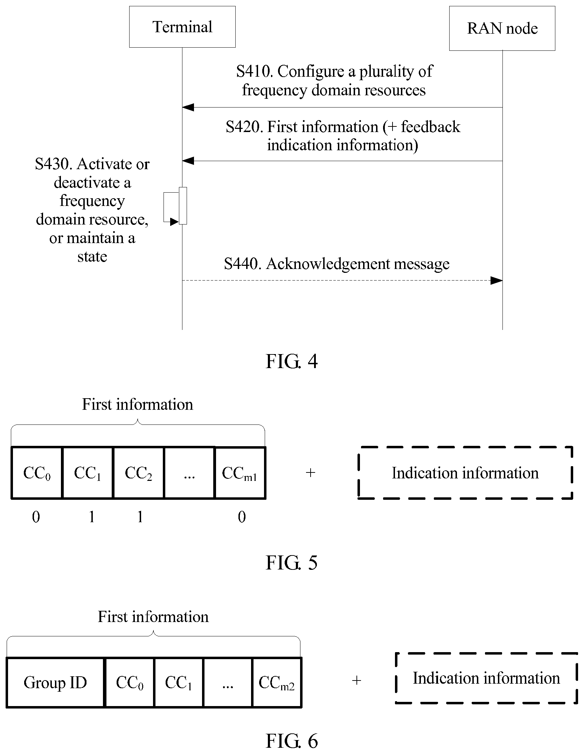

FIG. 4 is a schematic diagram of a frequency domain resource processing method according to an embodiment of this application. As shown in FIG. 4, the method includes the following steps.

S410. A RAN node configures a plurality of frequency domain resources for a terminal. To be specific, the RAN node sends configuration information to the terminal, where the configuration information is used to configure the plurality of frequency domain resources for the terminal; in other words, the configuration information is used to indicate the plurality of frequency domain resources to the terminal.

The terminal receives the configuration information from the RAN node, to learn the plurality of frequency domain resources configured by the RAN node for the terminal.

S420. The RAN node sends first information to the terminal, where the first information is carried on a physical downlink control channel (PDCCH), the first information includes a plurality of information bits, the plurality of information bits correspond to the plurality of frequency domain resources respectively, and the information bits in the first information are used to instruct to activate or deactivate the frequency domain resources corresponding to the information bits.

The terminal receives the first information from the RAN node, and performs the following operation:
S430. The terminal makes, based on the first information, a frequency domain resource enter a state indicated by a corresponding information bit or maintain a state indicated by a corresponding information bit, that is, activates a frequency domain resource that is to be activated as instructed by an information bit or maintains an active state of a frequency domain resource that is to be activated as instructed by an information bit, and/or deactivates a frequency domain resource that is to be deactivated as instructed by an information bit or maintains an inactive state of a frequency domain resource that is to be deactivated as instructed by an information bit.

For example, the first information includes a bitmap (bitmap). The bitmap includes M information bits, where M is a positive integer. Descriptions are provided by using an example in which M = 4 and a frequency domain resource is a CC. For example, a bitmap is "0011" that respectively correspond to a CC₀ to a CC₃, where "1" indicates activation, and "0" indicates deactivation. In this case, if the CC₂ and the CC₃ are in a non-activated state, the terminal activates the CC₂ and the CC₃ based on the first information. If the CC₂ and the CC₃ are in an active state, the terminal maintains the active state of the CC₂ and the active state of the CC₃ based on the first information. If the CC₀ and the CC₁ are in an active state, the terminal deactivates the CC₀ and the CC₁. If the CC₀ and the CC₁ are in an inactive state, the terminal maintains the inactive state of the CC₀ and the inactive state of the CC₁. The quantity of information bits herein is merely an example and is not limited in this application. Alternatively, "1" may instruct to perform deactivation, and "0" may instruct to perform activation. This is not limited in this application either.

In the frequency domain resource processing method, the RAN node activates or deactivates a frequency domain resource by using physical layer information. Compared with a manner of activating a carrier by using a MAC layer information element, this saves time for parsing the MAC information element, so that a corresponding activation or deactivation operation can be initiated in n+x, where x is a natural number less than 8, for example, n+0 or n+1. In addition, the plurality of corresponding information bits are respectively configured for the plurality of frequency domain resources, to instruct to activate or deactivate the corresponding frequency domain resources respectively. In this way, the plurality of frequency domain resources can be processed by sending only a piece of information. This improves frequency domain resource processing efficiency, and further increases frequency domain resource utilization.

In step S410, the RAN node may configure the plurality of frequency domain resources for the terminal by using a higher layer message. For example, the RAN node may configure the plurality of frequency domain resources for the terminal by using an RRC connection reconfiguration message. Then, in step S420, a frequency domain resource to be activated and a frequency domain resource to be deactivated are indicated to the terminal by using physical layer information. The physical layer information is, for example, downlink control information (downlink control information, DCI), and the first information is carried in the DCI. Certainly, the first information may be alternatively sent independently of the DCI. No limitation is set herein.

Referring to FIG. 4 again, optionally, the terminal may feed back, to the RAN node, a response message indicating whether the first information is successfully received. For example, when the terminal receives and successfully parses the first information, the terminal may feed back, to the RAN node, an acknowledgement (acknowledgement, ACK) message indicating that the first information is successfully received; or when the terminal does not receive or successfully parse the first information, the terminal may feed back a negative acknowledgement (negative acknowledgement, NACK) message to the RAN node. This can improve system reliability. In this case, the RAN node may further send indication information to the terminal. The indication information is used to indicate a time domain position of the response message for the first information. In step S420 shown in FIG. 4, the indication information may be further sent. The indication information may also be referred to as feedback indication information. The time domain position is, for example, a subframe, a slot, or a symbol. The indication information may be referred to as hybrid automatic repeat request (hybrid automatic repeat request, HARQ) timing (HARQ timing) indication information. The name is merely an example, and is not intended for limitation. In this case, the terminal may feed back, at the time domain position indicated by the indication information, the response message for the first information to the RAN node. In other words, the method further includes step S440. A sequence of steps S430 and S440 is not limited.

Optionally, the terminal may feed back a response message only for deactivation. For example, when an information bit "0" indicates deactivation, if a state of an information bit changes from "1" to "0", a response message is fed back, which is a feedback for deactivation. This improves deactivation reliability and avoids a waste of resources. For example, when the first information received by the terminal indicates that the terminal has a frequency domain resource that needs to be deactivated (a frequency domain resource in an active state that needs to be deactivated), the terminal feeds back a response message for the first information. This is because if the RAN node instructs the terminal to deactivate a frequency domain resource, but the terminal cannot successfully receive the instruction and continues to use the frequency domain resource for work, the RAN node cannot learn of the case, and information transmitted on the frequency domain resource is useless. This wastes the frequency domain resource. Providing a feedback only for deactivation can reduce a waste of frequency domain resources, and reduce feedback requirements, thereby reducing a feedback delay.

Optionally, when the time domain position indicated by the indication information coincides with a time domain position of a response message for a physical downlink shared channel (physical downlink shared channel, PDSCH) of the terminal, that is, the time domain positions are identical, the response message for the first information and the response message for the PDSCH may be coded jointly and fed back. For example, the response message for the first information is directly added to the response message for the PDSCH, and then the response message for the PDSCH with the response message for the first information is encoded and sent.

When the terminal feeds back the response message for the first information (including a scenario in which feedbacks are provided for both activation and deactivation and a scenario in which a feedback is provided only for deactivation), the RAN node may alternatively configure a resource for the terminal instead of sending the indication information. If there is energy on the resource, it is considered that an ACK is fed back. If there is no energy on the resource, it is considered that a NACK is fed back. The resource may be configured by the RAN node by using a higher layer message, for example, an RRC message.

The frequency domain resource in this embodiment may be a carrier, for example, an SCC. The following provides descriptions by using an example in which a frequency domain resource is a carrier.

FIG. 5 is a schematic diagram of one type of control information according to an embodiment of this application. The control information is carried on a PDCCH and includes the first information. Optionally, the control information may further include the indication information. A structure of the first information is the same as that described above. The first information includes a plurality of information bits. Each information bit corresponds to one CC, and is used to instruct to activate or deactivate the CC corresponding to the information bit. A quantity of the information bits may be equal to a quantity of configured SCCs, in other words, equal to a quantity of configured CCs minus 1. To be specific, a primary carrier is not to be activated or deactivated, and therefore is excluded. As shown in FIG. 5, the first information includes m1 information bits, where m1 is a positive integer. Each information bit corresponds to one CC, that is, one of a CC₀ to a CCₘ₁. When the information bit is "0", the information bit instructs to deactivate the CC corresponding to the information bit. When the information bit is "1", the information bit instructs to activate the CC corresponding to the information bit. Certainly, the other way around is also applicable. When the information bit is "1", the information bit instructs to deactivate the CC corresponding to the information bit. When the information bit is "0", the information bit instructs to activate the CC corresponding to the information bit. For example, a first information bit is "0". In this case, the first information bit instructs to deactivate the corresponding CC₀. If the CC₀ of the terminal is in an active state, the CC₀ is deactivated. If the CC₀ of the terminal is in an inactive state, the inactive state is maintained. The plurality of information bits may be arranged contiguously, or another information field may be added therebetween. No limitation is set herein.

For example, the first information is a bitmap. A size of the bitmap is the quantity of configured SCCs or the quantity of configured CCs minus 1. For example, if a maximum quantity of configured carriers is 16, the size of the bitmap may be 15 bits.

The first information may be terminal-level control information, in other words, control information specific to a terminal. Identification information may be used to identify that the first information is terminal-level control information. Alternatively, the first information may be controlled used as terminal-level control information in a scrambling manner. For example, different identifiers are assigned to different terminals, and the first information is scrambled by using the different identifiers. Each terminal performs descrambling by using a respective identifier, to obtain respective control information. In this way, the RAN node does not need to indicate a position of the control information of the terminal to the terminal, thereby saving signaling.

In addition, it may be further specified that information scrambled by using an identifier is used to activate or deactivate a frequency domain resource. For example, the first information is scrambled by using a first identifier. The first identifier is used to indicate that the first information is specific to the terminal and that the first information is used to activate or deactivate a frequency domain resource. Optionally, the first identifier may be a preset radio network temporary identifier (radio network temporary identifier, RNTI). The first identifier is used to indicate that the information scrambled by using the first identifier is specific to the terminal and that the information is used to activate or deactivate a frequency domain resource. The new RNTI may be referred to as an activation/deactivation RNTI (Act/Deact-RNTI).

When the first information is located in the control information in FIG. 5, a manner of scrambling the control information is the same as a manner of scrambling the first information. In other words, the first information is scrambled by scrambling the control information. When the first information and the indication information are located in the control information in FIG. 5, the first information and the indication information are also scrambled by scrambling the control information.

The control information may be DCI. In this case, the DCI is terminal-level DCI. In this way, the RAN node does not need to indicate a location of DCI of the terminal to the terminal. This saves signaling. A size of the DCI may be the same as an existing DCI load size, for example, 30 bits, 60 bits, 90 bits, or 120 bits. Certainly, a new size may be alternatively used. No limitation is set thereto.

In this embodiment, the terminal-level control information is set, so that the terminal can obtain activation/deactivation instruction information for all the configured frequency domain resources, for example, SCCs, at a time, to complete activation and deactivation at a time. In addition, the RAN node does not need to specifically indicate the position of the control information of the terminal, thereby saving signaling.

FIG. 6 is a schematic diagram of another type of control information according to an embodiment of this application. A RAN node may group frequency domain resources that can be configured for a terminal, in other words, group the frequency domain resources supported by the terminal into at least one frequency domain resource group, and assign a group identifier (group ID) to each group to identify the group. For example, the RAN node groups SCCs that can be configured for the terminal. For example, if the RAN node can configure 32 SCCs for the terminal, the RAN node groups the 32 SCCs into four groups, and each group includes eight SCCs. The RAN node may evenly or unevenly group the frequency domain resources. Frequency domain resources in different groups may or may not overlap.

The RAN node instructs, at a time, to activate or deactivate frequency domain resources in one group, without separately instructing to activate or deactivate all the frequency domain resources. This reduces overheads of the first information, thereby saving air interface resources. For example, if the manner shown in FIG. 5 is used, 32-bit first information is required for instructing to activate or deactivate the 32 SCCs. However, if the grouping manner is used, only a 2-bit group identifier and eight information bits are required. In this way, a total of 10 bits of information are required for instructing to activate or deactivate SCCs in a group, thereby saving air interface resources. This manner is especially applicable to a scenario in which the RAN node can configure a relatively large quantity of frequency domain resources. Not all the frequency domain resources need to be used at a current moment. Therefore, the RAN node groups the frequency domain resources that can be configured, and then instructs, at a time, to activate or deactivate frequency domain resources in a group configured for the terminal. This not only increases frequency domain resource utilization, but also saves air interface resources.

As shown in FIG. 6, the first information includes a group identifier and a plurality of information bits. The group identifier is used to identify a frequency domain resource group configured by the RAN node for the terminal. The plurality of information bits correspond to a plurality of frequency domain resources in the frequency domain resource group respectively, and are used to instruct to activate or deactivate the corresponding frequency domain resources respectively. In this embodiment, for example, the frequency domain resources are CCs, and the frequency domain resource group includes m2 CCs, where m2 is a positive integer. A value of an information bit corresponding to each CC and content indicated by the information bit are the same as those described above. Details are not described herein again.

In addition, a structure of the information bits in the first information is the same as that in the embodiment shown in FIG. 5. Details are not described herein again.

In addition, the first information may be terminal-level control information, which is the same as the case in the embodiment shown in FIG. 5. An implementation and an advantage of the terminal-level control information are the same as those in the foregoing embodiment. Details are not described herein again.

In addition, the control information shown in FIG. 6 may further include the indication information, which is the same as the case in the embodiment shown in FIG. 5. Specific descriptions are the same as those in the foregoing embodiment. Details are not described herein again. In addition, the control information may be DCI. For details, refer to the descriptions in the embodiment shown in FIG. 5.

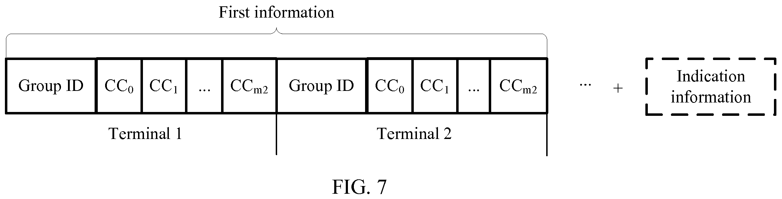

FIG. 7 is a schematic diagram of still another type of control information according to an embodiment of this application. A difference between this embodiment and the embodiment shown in FIG. 6 lies in that the control information is not terminal-level control information, and information for controlling activation or deactivation of frequency domain resources may be delivered to a plurality of terminals by using a same piece of control information. In this case, the control information not only includes the first information specific to the terminal, but also includes second information specific to another terminal. The second information has a same structure as the first information, and includes a plurality of information bits. The plurality of information bits respectively correspond to a plurality of frequency domain resources configured by the RAN node for the another terminal. The information bits in the second information are used to activate or deactivate the frequency domain resources corresponding to the information bits. There may be one or more other terminals. Herein, for example, the terminal is a terminal 1 in FIG. 7, and the another terminal is a terminal 2 in FIG. 7. Certainly, more other terminals may be further included.

In this case, the RAN node may indicate, to the terminal, a position of the first information of the terminal in the control information, for example, a start bit (bit) of the first information. To be specific, the RAN node sends indication information to each terminal, where the indication information is used to indicate a position of information, of the corresponding terminal, that controls activation or deactivation of a frequency domain resource of the corresponding terminal. For example, indication information used to indicate positions of information that controls activation or deactivation of frequency domain resources of the terminal 1 and the terminal 2 is respectively sent to the terminal 1 and the terminal 2. The RAN node may indicate the position of the first information in the control information by using higher layer information. To be specific, the RAN node may indicate, by using the higher layer information, the position of the information, of the corresponding terminal, that controls activation or deactivation of the frequency domain resource of the corresponding terminal. In this case, the terminal can determine the position of the first information in the control information based on the information that indicates the position, thereby obtaining the first information through parsing. Certainly, each terminal has its own indication information indicating a position of information that controls activation or deactivation of a frequency domain resource of the terminal, so that each terminal determines the position, in the control information, of the information that controls activation or deactivation of the frequency domain resource of the terminal, and performs parsing.

In this case, the RAN node may scramble the control information by using a second identifier. The second identifier is used to indicate that the control information is used to activate or deactivate a frequency domain resource. The second identifier may also be an RNTI. A value of the second identifier is different from that of the first identifier. The second identifier may also be referred to as an activation/deactivation RNTI (Act/Deact-RNTI).

In addition, the control information may be DCI. Specific descriptions are the same as those in the foregoing embodiment. Details are not described herein again.

Optionally, the RAN node may group terminals, and control activation or deactivation of frequency domain resources, for example, CCs, in one terminal group at a time. Compared with the cases in the embodiments shown in FIG. 5 and FIG. 6, a case in which there is a relatively large quantity of terminals can reduce requirements on terminal-level scrambling identifiers, and reduce control information overheads, thereby saving air interface resources. In this case, the control information is terminal group-level control information. In this case, the first information or the control information is scrambled by using a third identifier. The third identifier is used to indicate that the first information is specific to a terminal group in which the terminal is located and that the first information is used to activate or deactivate a frequency domain resource.

The frequency domain resources in the foregoing embodiments may be BPs. In this case, the SCCs in the foregoing embodiments may be replaced by BPs, to control activation or deactivation of the BPs, in other words, to instruct the terminal to perform a BP switchover.

For the terminal, a BP may be activated or deactivated. In this case, a quantity of the information bits in the first information in the embodiment shown in FIG. 5 may be equal to a maximum quantity of BPs that can be configured for the terminal. A BP switchover is controlled by setting an information bit to "0" or "1". For BPs, there is no default BP or primary BP. In other words, all the BPs can be activated or deactivated, and a quantity of information bits indicating the BPs is the same as the maximum quantity of BPs that can be configured for the terminal.

Optionally, when successfully receiving the first information, the terminal feeds back a response message to the RAN node. This improves system reliability and reliability of successfully switching both the RAN node and the terminal to a same BP.

The embodiment shown in FIG. 5 may be applied to a case in which the terminal can use only one BP at a same time, and may be further applied to a case in which the terminal uses a plurality of BPs at a same time. When the terminal can use only one BP at a same time, only one of the information bits is set to a value that instructs to activate a frequency domain resource.

For example, the terminal supports activation and deactivation of five BPs, and the first information is implemented by using a bitmap. If a previous bitmap is 10000 and a current bitmap is 01000, a BP 1 is deactivated, and a BP 2 is activated. This corresponds to a switchover between the BP 1 and the BP 2.

Because the terminal uses only one BP at a same time, in the example in which the terminal supports five BPs, a 5-bit bitmap is used to correspond to the five BPs, where only one bit is 1, and all other bits are 0s, so that only one BP is activated at a same time.

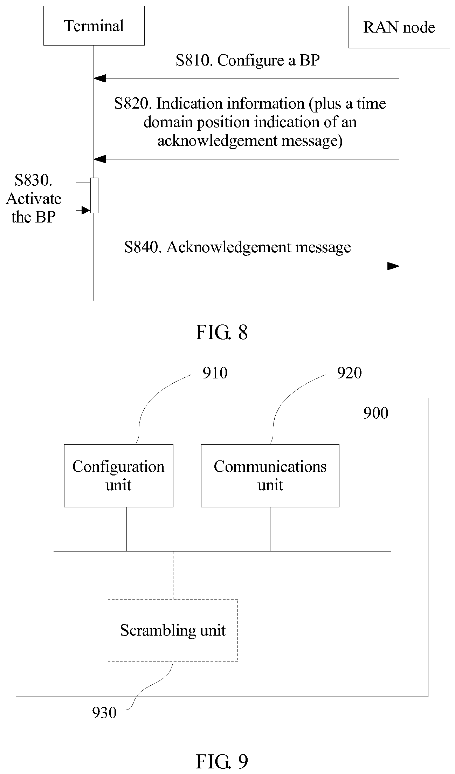

An embodiment of this application further provides another implementation for the case in which the terminal uses only one BP at a same time. Referring to FIG. 8, the method includes the following steps.

S810. A RAN node configures a BP for a terminal.

Optionally, the RAN node may configure the BP for the terminal by using a higher layer message, for example, an RRC message.

S820. The RAN node sends indication information to the terminal, where the indication information is used to indicate an identifier of a to-be-activated BP.

The indication information is carried on a PDCCH, for example, carried in a DCI.

The terminal receives the indication information and performs the following operation:
S830. Activate the BP indicated by the indication information.

The indication information may include only the identifier of the to-be activated BP. When the terminal learns that a currently used BP is different from the to-be-activated BP, the terminal deactivates the currently used BP and activates the to-be-activated BP.

For example, the indication information may be an index of a BP. For example, the terminal supports five BPs, and three bits are used to represent a specific to-be-activated BP. For example, 000 represents a first BP, and 001 represents a second BP. When receiving the indication information, the terminal may determine whether the currently used BP is the to-be-activated BP. If the currently used BP is not the to-be-activated BP, the terminal deactivates the current used BP and activates the BP indicated by the indication information.

The feedback mechanism in the foregoing embodiments may be used in this embodiment. For example, a time domain position indication of a response message is sent in step S820, and then the response message is fed back in step S840. The feedback mechanism is the same as that in the foregoing embodiments. Details are not described herein again. A sequence of steps S830 and S840 is not limited.

Optionally, when a plurality of BPs can be configured for the terminal and there is an overlapping area between the BPs, a resource on which the first information or the control information including the first information is located is not in the overlapping area between the BPs. This reduces complexity caused by operations such as rate matching. For example, a subcarrier spacing of a BP 1 of a terminal 1 is 30 kHz, and a subcarrier spacing of a BP 2 of a terminal 2 is 15 kHz. In this case, if control information of the BP 1 is placed in the overlapping area, the BP 2 of the terminal 2 is affected, and the BP 2 cannot use a corresponding position of the control information of the BP 1 or a guard bandwidth part between different numerologies. Therefore, a rate matching operation needs to be performed on data of the BP 2. This operation is more complex, and wastes resources of the BP 2. The numerologies are a plurality of time-frequency resource configurations configured by the RAN node for the terminal. The time-frequency resource configuration includes one or all of the following configurations: a frequency domain length of a resource element (resource element, RE), that is, a subcarrier spacing; a time domain length of the RE, that is, duration of an orthogonal frequency division multiplexing (orthogonal frequency division multiplexing, OFDM) symbol; a quantity of time resource units in a scheduling time unit; a cyclic prefix (cyclic prefix, CP) type of the OFDM symbol; or the like. For example, the subcarrier spacing may be, for example, 15 kHz, 30 kHz, or 60 kHz. The duration of the OFDM symbol is inversely proportional to the subcarrier spacing. Therefore, a plurality of duration values may be configured for the OFDM symbol. The scheduling time unit is a resource scheduling unit or granularity in time domain. The scheduling time unit is referred to as a transmission time interval (transmission time interval, TTI) in an LTE system. The time resource unit is a resource unit in time domain. It can be learned that the quantity of time resource units in the scheduling time unit refers to a quantity of time resource units in one scheduling operation in time domain. For example, when the scheduling time unit is one subframe, the quantity of time resource units in the scheduling time unit is a quantity of OFDM symbols in one scheduling operation in the subframe. The CP type may be, for example, a regular CP or an extended CP.

The foregoing methods may be implemented by corresponding apparatuses. The following provides descriptions with reference to accompanying drawings.

FIG. 9 is a schematic diagram of a frequency domain resource processing apparatus according to an embodiment of this application. The apparatus 900 is used for a RAN node. As shown in FIG. 9, the apparatus 900 includes units or means (means) for performing the steps performed by the RAN node in any one of the foregoing method embodiments. All the detailed descriptions in these steps can be applicable to this apparatus embodiment. For example, the apparatus 900 includes a configuration unit 910 and a communications unit 920. The communications unit 920 is configured to control communication between the RAN node and a terminal. The communications unit 920 can receive and send messages through an interface (for example, an air interface) between the RAN node and the terminal. The interface herein is a logical concept, and a corresponding logical unit needs to be disposed in implementation, to meet a protocol requirement of the corresponding interface.

The configuration unit 910 is configured to configure a plurality of frequency domain resources for the terminal. The communications unit 920 is configured to control sending of first information or sending of control information that includes the first information. In addition, the apparatus 900 may further include a scrambling unit 930, configured to scramble the first information or the control information that includes the first information. A scrambling manner of the scrambling unit 930 is the same as that in the foregoing method embodiments. Details are not described herein again.

Optionally, the communications unit 920 may further control sending of indication information, where the indication information is used to indicate a time domain position of a response message for the first information.

Optionally, the communications unit 920 may further indicate a position of the first information in the control information to the terminal.

It should be understood that division of the units of the foregoing apparatus is merely division of logical functions. During actual implementation, all or some of the units may be integrated into a physical entity, or may be physically separated. In addition, all the units may be implemented in a form of software invoked by a processing element, or may be implemented in a form of hardware; or some units are implemented in a form of software invoked by a processing element, and some units are implemented in a form of hardware. For example, the configuration unit 910 may be implemented as a separately disposed processing element, or may be integrated into a chip of the RAN node. Alternatively, the configuration unit 910 may be stored in a memory of the RAN node as a program and invoked by a processing element of the RAN node to perform a function of the unit. Implementation of another unit is similar to that of the configuration unit 910. In addition, all or some of the units may be integrated together or may be implemented separately. The processing element herein may be an integrated circuit with a signal processing capability. In an implementation process, the steps in the foregoing methods or the foregoing units may be implemented by using an integrated logical circuit of hardware in the processing element, or by using an instruction in a form of software. In addition, the foregoing communications unit is a communication control unit, and may receive information sent by the terminal or send information to the terminal, through a transceiver apparatus, for example, an antenna and a radio frequency apparatus, of the RAN node.

For example, the foregoing units may be one or more integrated circuits configured to implement the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing units is implemented in a form of a processing element scheduling a program, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

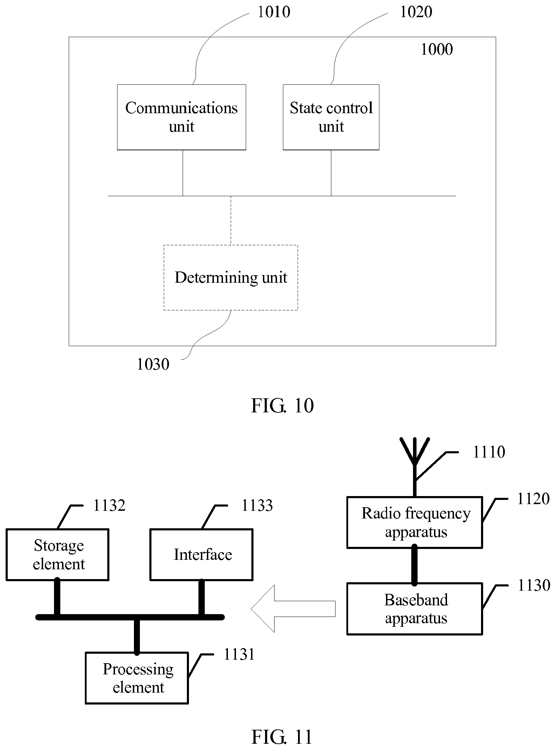

FIG. 10 is a schematic diagram of a frequency domain resource processing apparatus according to an embodiment of this application. The apparatus 1000 is used for a terminal. As shown in FIG. 10, the apparatus 1000 includes units or means (means) for performing the steps performed by the terminal in any one of the foregoing method embodiments. All the detailed descriptions in these steps can be applicable to this apparatus embodiment. The apparatus includes a communications unit 1010 and a state control unit 1020. The communications unit 1010 is configured to control communication with a RAN node, and may receive and send messages through an interface (for example, an air interface) between the terminal and the RAN node. The interface herein is a logical concept, and a corresponding logical unit needs to be disposed in implementation, to meet a protocol requirement of the corresponding interface.

For example, the communications unit 1010 is configured to receive, through a transceiver apparatus of the terminal, configuration information sent by the RAN node, where the configuration information is used to configure a plurality of frequency domain resources for the terminal. In addition, the communications unit 1010 is further configured to receive, through the transceiver apparatus of the terminal, first information or control information that includes the first information, where the first information or the control information is sent by the RAN node. Descriptions of the first information are the same as those in the foregoing embodiments. Details are not described herein again. The state control unit 1020 is configured to make, based on the first information, a frequency domain resource enter a state indicated by a corresponding information bit or maintain a state indicated by a corresponding information bit.

Optionally, the communications unit 1010 may further receive, from the RAN node through the transceiver apparatus of the terminal, information used to indicate a position of the first information in the control information. In this case, the apparatus 1000 may further include a determining unit 1030, configured to determine the position of the first information in the control information based on the information that indicates the position of the first information in the control information, thereby obtaining the first information through parsing.

Optionally, the communications unit 1010 may further receive indication information from the RAN node through the transceiver apparatus of the terminal, where the indication information is used to indicate a time domain position of a response message for the first information. In addition, the communications unit 1010 further feeds back the response message for the first information to the RAN node through the transceiver apparatus of the terminal.

It should be understood that division of the units of the foregoing apparatus is merely division of logical functions. During actual implementation, all or some of the units may be integrated into a physical entity, or may be physically separated. In addition, all the units may be implemented in a form of software invoked by a processing element, or may be implemented in a form of hardware; or some units are implemented in a form of software invoked by a processing element, and some units are implemented in a form of hardware. For example, the communications unit 1010 may be implemented as a separately disposed processing element, or may be integrated into a chip of the terminal. Alternatively, the communications unit 1010 may be stored in a memory of the terminal as a program and invoked by a processing element of the terminal to perform a function of the unit. Implementation of another unit is similar to that of the communications unit 1010. In addition, all or some of the units may be integrated together or may be implemented separately. The processing element herein may be an integrated circuit with a signal processing capability. In an implementation process, the steps in the foregoing methods or the foregoing units may be implemented by using an integrated logical circuit of hardware in the processing element, or by using an instruction in a form of software.

For example, the foregoing units may be one or more integrated circuits configured to implement the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the foregoing units is implemented in a form of a processing element scheduling a program, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

FIG. 11 is a schematic structural diagram of a RAN node according to an embodiment of this application. The RAN node may be the RAN node in the foregoing embodiments, and is configured to perform the operations performed by the RAN node in the foregoing embodiments. As shown in FIG. 11, the RAN node includes an antenna 1110, a radio frequency apparatus 1120, and a baseband apparatus 1130. The antenna 1110 is connected to the radio frequency apparatus 1120. In an uplink direction, the radio frequency apparatus 1120 receives, through the antenna 1110, information sent by a terminal, and sends, to the baseband apparatus 1130 for processing, the information sent by the terminal. In a downlink direction, the baseband apparatus 1130 processes information for a terminal, and sends the information to the radio frequency apparatus 1120. The radio frequency apparatus 1120 processes the information for the terminal and then sends processed information to the terminal through the antenna 1110.

The baseband apparatus 1130 may be a baseband board. The RAN node may usually include a plurality of baseband boards, and a plurality of processing elements may be integrated into a baseband board to implement a required function. For example, the foregoing frequency domain resource processing apparatus may be located in the baseband apparatus 1130. In an implementation, the units shown in FIG. 9 are implemented by a processing element scheduling a program. For example, the baseband apparatus 1130 includes a processing element 1131 and a storage element 1132. The processing element 1131 invokes a program stored in the storage element 1132 to perform the method performed by the RAN node in the foregoing method embodiments. In addition, the baseband apparatus 1130 may further include an interface 1133, configured to exchange information with the radio frequency apparatus 1120. The interface is, for example, a common public radio interface (common public radio interface, CPRI).

In another implementation, the units shown in FIG. 9 may be one or more processing elements configured to implement the method performed by the RAN node. These processing elements are disposed on the baseband apparatus 1130. The processing element herein may be an integrated circuit, for example, one or more ASICs, one or more DSPs, or one or more FPGAs. These integrated circuits may be integrated together to form a chip.

For example, all units shown in FIG. 9 may be integrated, and implemented in a form of a system-on-a-chip (system-on-a-chip, SOC). For example, the baseband apparatus 1130 includes a SOC chip configured to implement the foregoing method. The chip may be integrated with the processing element 1131 and the storage element 1132, and the processing element 1131 invokes the program stored in the storage element 1132 to implement the foregoing method performed by the RAN node or functions of the units shown in FIG. 9. Alternatively, the chip may be integrated with at least one integrated circuit, to implement the foregoing method performed by the RAN node or functions of the units shown in FIG. 9. Alternatively, the foregoing implementations may be combined, where functions of some units are implemented by the processing element invoking a program, and functions of some units are implemented by an integrated circuit.

In summary, regardless of a manner used, the foregoing frequency domain resource processing apparatus used for the RAN node includes at least one processing element and at least one storage element. The at least one processing element is configured to perform the method performed by the RAN node in the foregoing method embodiments. The processing element may perform some or all steps performed by the RAN node in the foregoing method embodiments, in a first manner, to be specific, in a manner of executing the program stored in the storage element; or may perform some or all steps performed by the RAN node in the foregoing method embodiments, in a second manner, to be specific, in a manner of combining a hardware integrated logical circuit in the processor element with an instruction; or may certainly perform, with reference to a first manner and a second manner, some or all steps performed by the RAN node in the foregoing method embodiments.

Similar to the foregoing descriptions, the processing element herein may be a general-purpose processor such as a central processing unit (Central Processing Unit, CPU), or may be one or more integrated circuits configured to implement the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA).

The storage element may be a memory, or may be a general term of a plurality of storage elements.

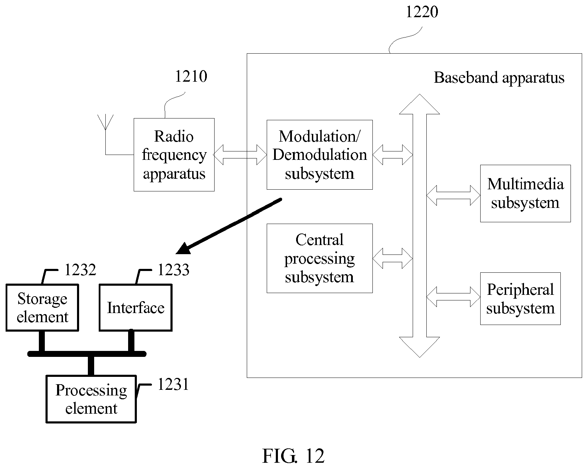

FIG. 12 is a schematic structural diagram of a terminal according to an embodiment of this application. The terminal may be the terminal in the foregoing embodiments and is configured to implement operations of the terminal in the foregoing embodiments. As shown in FIG. 12, the terminal includes an antenna, a radio frequency apparatus 1210, and a baseband apparatus 1220. The antenna is connected to the radio frequency apparatus 1210. In a downlink direction, the radio frequency apparatus 1210 receives, through the antenna, information sent by a RAN node, and sends, to the baseband apparatus 1220 for processing, the information sent by the RAN node. In an uplink direction, the baseband apparatus 1220 processes information of the terminal and sends the information to the radio frequency apparatus 1210, and the radio frequency apparatus 1210 processes the information of the terminal and then sends processed information to the RAN node through the antenna.

The baseband apparatus may include a modulation/demodulation subsystem, configured to process data in each communication protocol layer. The baseband apparatus may further include a central processing subsystem, configured to implement processing of an operating system and an application layer of the terminal. In addition, the baseband apparatus may further include other subsystems, for example, a multimedia subsystem and a peripheral subsystem. The multimedia subsystem is configured to implement control a terminal camera, a screen display, or the like, and the peripheral subsystem is configured to implement connections to other devices. The modulation/demodulation subsystem may be an independently disposed chip. Optionally, the foregoing frequency domain resource processing apparatus may be implemented in the modulation/demodulation subsystem.

In an implementation, each unit shown in FIG. 10 is implemented in a form of a processing element scheduling a program. For example, a subsystem, such as the modulation/demodulation subsystem, of the baseband apparatus 1220 includes a processing element 1231 and a storage element 1232. The processing element 1231 invokes a program stored in the storage element 1232 to perform the method performed by the terminal in the foregoing method embodiments. In addition, the baseband apparatus 1220 may further include an interface 1233, configured to exchange information with the radio frequency apparatus 1210.

In another implementation, the units shown in FIG. 10 may be one or more processing elements configured to implement the method performed by the terminal. These processing elements are disposed in a subsystem, for example, the modulation/demodulation subsystem, of the baseband apparatus 1220. The processing element herein may be an integrated circuit, for example, one or more ASICs, one or more DSPs, or one or more FPGAs. These integrated circuits may be integrated together to form a chip.

For example, all units shown in FIG. 10 may be integrated, and implemented in a form of a system-on-a-chip (system-on-a-chip, SOC). For example, the baseband apparatus 1220 includes a SOC chip configured to implement the foregoing method. The chip may be integrated with the processing element 1231 and the storage element 1232, and the processing element 1231 invokes the program stored in the storage element 1232 to implement the foregoing method performed by the terminal or functions of the units shown in FIG. 10. Alternatively, the chip may be integrated with at least one integrated circuit, to implement the foregoing method performed by the terminal or functions of the units shown in FIG. 10. Alternatively, the foregoing implementations may be combined, where functions of some units are implemented by the processing element invoking a program, and functions of some units are implemented by an integrated circuit.

In summary, regardless of a manner used, the foregoing frequency domain resource processing apparatus used for the terminal includes at least one processing element and at least one storage element. The at least one processing element is configured to perform the method performed by the terminal in the foregoing method embodiments. The processing element may perform some or all steps performed by the terminal in the foregoing method embodiments, in a first manner, to be specific, in a manner of executing the program stored in the storage element; or may perform some or all steps performed by the terminal in the foregoing method embodiments, in a second manner, that is, in a manner of combining a hardware integrated logical circuit in the processing element with an instruction; or may certainly perform, with reference to a first manner and a second manner, some or all steps performed by the terminal in the foregoing method embodiments.

Similar to the foregoing descriptions, the processing element herein may be a general-purpose processor such as a central processing unit (Central Processing Unit, CPU), or may be one or more integrated circuits configured to implement the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA).

The storage element may be a memory, or may be a general term of a plurality of storage elements.

A person of ordinary skill in the art may understand that all or some of the steps of the method embodiments may be implemented by a program instructing related hardware. The program may be stored in a computer readable storage medium. When the program runs, the steps in the method embodiments are performed. The storage medium includes each kind of medium that can store program code, such as a ROM, a RAM, a magnetic disk, or a compact disc.

## Claims

1. A frequency domain resource processing method, comprising:
configuring (S410), by a radio access network, RAN, node, a plurality of frequency domain resources for a terminal, wherein the plurality of frequency domain resources are in a first frequency domain resource group configured by the RAN node for the terminal;
sending (S420), by the RAN node, first information to the terminal, wherein the first information is carried on a physical downlink control channel, PDCCH, the first information comprises a plurality of information bits and a group identifier of the first frequency domain resource group, the plurality of information bits correspond to the plurality of frequency domain resources respectively, and the information bits in the first information are used to instruct to activate or deactivate the frequency domain resources corresponding to the information bits; and
instructing, by the RAN node, at a time, to activate or deactivate the plurality of frequency domain resources in the first frequency domain resource group based on the group identifier.

2. The method according to claim 1, wherein the first information is terminal-level control information.

3. The method according to claim 2, wherein the first information is scrambled by using a first identifier, and the first identifier is used to indicate that the first information is specific to the terminal and that the first information is used to activate or deactivate a frequency domain resource.

4. The method according to any one of claims 1 to 3, further comprising:
sending, by the RAN node, indication information to the terminal, wherein the indication information is used to indicate a time domain position of a response message for the first information.

5. A frequency domain resource processing method, comprising:
receiving, by a terminal, configuration information from a radio access network, RAN, node, wherein the configuration information is used to configure a plurality of frequency domain resources for the terminal and wherein the plurality of frequency domain resources are in a first frequency domain resource group configured by the RAN node for the terminal;
receiving, by the terminal, first information from the RAN node, wherein the first information is carried on a physical downlink control channel, PDCCH, the first information comprises a plurality of information bits and a group identifier of the first frequency domain resource group, the plurality of information bits correspond to the plurality of frequency domain resources respectively, and the information bits in the first information are used to instruct to activate or deactivate the frequency domain resources corresponding to the information bits; and
making (S430), by the terminal based on the first information, a frequency domain resource enter a state indicated by a corresponding information bit or maintain a state indicated by a corresponding information bit;
wherein the RAN node instructs, at a time, to activate or deactivate the plurality of frequency domain resources in the first frequency domain resource group.

6. The method according to claim 5, wherein the first information is terminal-level control information.

7. The method according to claim 6, wherein the first information is scrambled by using a first identifier, and the first identifier is used to indicate that the first information is specific to the terminal and that the first information is used to activate or deactivate a frequency domain resource.

8. The method according to any one of claims 5 to 7, further comprising:
receiving, by the terminal, indication information from the RAN node, wherein the indication information is used to indicate a time domain position of a response message for the first information; and
feeding back, by the terminal at the time domain position, the response message for the first information to the RAN node.

9. The method according to claim 8, wherein when a deactivated frequency domain resource exists, the terminal feeds back, at the time domain position, the response message for the first information to the RAN node.

10. The method according to claim 8 or 9, wherein the first information and the indication information are carried in downlink control information, DCI.

11. The method according to any one of claims 5 to 10, wherein the frequency domain resources are secondary component carriers or bandwidth parts, BPs.

12. A frequency domain resource processing apparatus (900), comprising means for performing the steps according to any one of claims 1 to 4.

13. A computer storage medium, wherein the computer storage medium stores a computer program, and when executed by a processor, the program is used to implement the method according to any one of claims 1 to 11.

## Patentansprüche

1. Verfahren zur Verarbeitung von Frequenzbereichsressourcen, das Folgendes umfasst:
Konfigurieren (S410) einer Vielzahl von Frequenzbereichsressourcen für ein Endgerät durch einen Funkzugangsnetzwerkknoten (RAN-Knoten), wobei sich die Vielzahl von Frequenzbereichsressourcen in einer ersten Frequenzbereichsressourcengruppe befindet, die durch den RAN-Knoten für das Endgerät konfiguriert ist;
Senden (S420) von ersten Informationen an das Endgerät durch den RAN-Knoten, wobei die ersten Informationen auf einem physischen Downlink-Steuerkanal (PDCCH) transportiert werden und die ersten Informationen eine Vielzahl von Informationsbits und eine Gruppenkennung der ersten Frequenzbereichsressourcengruppe umfassen, wobei die Vielzahl von Informationsbits jeweils der Vielzahl von Frequenzbereichsressourcen entspricht und die Informationsbits in den ersten Informationen dazu verwendet werden, den Informationsbits entsprechend das Aktivieren oder Deaktivieren der Frequenzbereichsressourcen anzuweisen; und Anweisen auf Grundlage der Gruppenkennung durch den RAN-Knoten, jeweils die Vielzahl von Frequenzbereichsressourcen in der ersten Frequenzbereichsressourcengruppe zu aktivieren oder zu deaktivieren.

2. Verfahren nach Anspruch 1, wobei die ersten Informationen Steuerinformationen auf Endgerätebene sind.

3. Verfahren nach Anspruch 2, wobei die ersten Informationen unter Verwendung einer ersten Kennung verschlüsselt sind und die erste Kennung dazu verwendet wird, anzugeben, das die ersten Informationen für das Endgerät spezifisch sind und dass die ersten Informationen dazu verwendet werden, eine Frequenzbereichsressource zu aktivieren oder zu deaktivieren.

4. Verfahren nach einem der Ansprüche 1 bis 3, das ferner Folgendes umfasst:
Senden von Angabeinformationen an das Endgerät durch den RAN-Knoten, wobei die Angabeinformationen dazu verwendet werden, eine Zeitbereichsposition einer Antwortnachricht für die ersten Informationen anzugeben.

5. Verfahren zur Verarbeitung von Frequenzbereichsressourcen, das Folgendes umfasst:
Empfangen von Konfigurationsinformationen von einem Funkzugangsnetzwerkknoten (RAN-Knoten) durch ein Endgerät, wobei die Konfigurationsinformationen dazu verwendet werden, eine Vielzahl von Frequenzbereichsressourcen für das Endgerät zu konfigurieren und wobei sich die Vielzahl von Frequenzbereichsressourcen in einer ersten Frequenzbereichsressourcengruppe befindet, die durch den RAN-Knoten für das Endgerät konfiguriert ist;
Empfangen von ersten Informationen von dem RAN-Knoten durch das Endgerät, wobei die ersten Informationen auf einem physischen Downlink-Steuerkanal (PDCCH) transportiert werden und die ersten Informationen eine Vielzahl von Informationsbits und eine Gruppenkennung der ersten Frequenzbereichsressourcengruppe umfassen, wobei die Vielzahl von Informationsbits jeweils der Vielzahl von Frequenzbereichsressourcen entspricht und die Informationsbits in den ersten Informationen dazu verwendet werden, den Informationsbits entsprechend das Aktivieren oder Deaktivieren der Frequenzbereichsressourcen anzuweisen; und
Verursachen (S430), durch das Endgerät auf Grundlage der ersten Informationen, dass eine Frequenzbereichsressource in einen Zustand übergeht, der durch ein entsprechendes Informationsbit angegeben wird, oder einen Zustand beibehält, der durch ein entsprechendes Informationsbit angegeben wird;
wobei der RAN-Knoten jeweils anweist, die Vielzahl von Frequenzbereichsressourcen in der ersten Frequenzbereichsressourcengruppe zu aktivieren oder zu deaktivieren.

6. Verfahren nach Anspruch 5, wobei die ersten Informationen Steuerinformationen auf Endgerätebene sind.

7. Verfahren nach Anspruch 6, wobei die ersten Informationen unter Verwendung einer ersten Kennung verschlüsselt sind und die erste Kennung dazu verwendet wird, anzugeben, das die ersten Informationen für das Endgerät spezifisch sind und dass die ersten Informationen dazu verwendet werden, eine Frequenzbereichsressource zu aktivieren oder zu deaktivieren.

8. Verfahren nach einem der Ansprüche 5 bis 7, das ferner Folgendes umfasst:
Empfangen von Angabeinformationen von dem RAN-Knoten durch das Endgerät, wobei die Angabeinformationen dazu verwendet werden, eine Zeitbereichsposition einer Antwortnachricht für die ersten Informationen anzugeben; und
Rückmelden der Antwortnachricht für die ersten Informationen an den RAN-Knoten durch das Endgerät an der Zeitbereichsposition.

9. Verfahren nach Anspruch 8, wobei, wenn eine deaktivierte Frequenzbereichsressource existiert, das Endgerät die Antwortnachricht für die ersten Informationen bei der Zeitbereichsposition an den RAN-Knoten rückmeldet.

10. Verfahren nach Anspruch 8 oder 9, wobei die ersten Informationen und die Angabeinformationen in Downlink-Steuerinformationen (DCI) transportiert werden.

11. Verfahren nach einem der Ansprüche 5 bis 10, wobei die Frequenzbereichsressourcen sekundäre Komponententräger oder Bandbreitenteile (BP) sind.

12. Gerät (900) zur Verarbeitung von Frequenzbereichsressourcen, das Mittel zum Durchführen der Schritte nach einem der Ansprüche 1 bis 4 umfasst.

13. Computerspeichermedium, wobei das Computerspeichermedium ein Computerprogramm speichert und das Programm bei Ausführung durch einen Prozessor dazu verwendet wird, das Verfahren nach einem der Ansprüche 1 bis 11 umzusetzen.

## Revendications

1. Procédé de traitement de ressources de domaine de fréquence, comprenant :
la configuration (S410), au moyen d'un nœud de réseau d'accès radio, RAN, d'une pluralité de ressources de domaine de fréquence pour un terminal, dans lequel la pluralité de ressources de domaine de fréquence sont dans un premier groupe de ressources de domaine de fréquence configuré par le nœud RAN pour le terminal ;
l'envoi (S420), au moyen du nœud RAN, de premières informations au terminal, dans lequel les premières informations sont transportées sur un canal de commande de liaison descendante physique, PDCCH, les premières informations comprennent une pluralité de bits d'information et un identifiant de groupe du premier groupe de ressources de domaine de fréquence, la pluralité de bits d'information correspondent respectivement à la pluralité de ressources de domaine de fréquence, et les bits d'information dans les premières informations sont utilisés pour donner l'instruction d'activer ou de désactiver les ressources de domaine de fréquence correspondant aux bits d'information ; et
l'instruction, au moyen du nœud RAN, à un moment donné, d'activer ou de désactiver la pluralité de ressources de domaine de fréquence dans le premier groupe de ressources de domaine de fréquence sur la base de l'identifiant de groupe.

2. Procédé selon la revendication 1, dans lequel les premières informations sont des informations de commande au niveau du terminal.

3. Procédé selon la revendication 2, dans lequel les premières informations sont brouillées en utilisant un premier identifiant, et le premier identifiant est utilisé pour indiquer que les premières informations sont spécifiques au terminal et que les premières informations sont utilisées pour activer ou désactiver une ressource de domaine de fréquence.

4. Procédé selon l'une quelconque des revendications 1 à 3, comprenant en outre :
l'envoi, au moyen du nœud RAN, d'informations d'indication au terminal, dans lequel les informations d'indication sont utilisées pour indiquer une position dans le domaine temporel d'un message de réponse pour les premières informations.

5. Procédé de traitement de ressources de domaine de fréquence, comprenant :
la réception, au moyen d'un terminal, d'informations de configuration provenant d'un nœud de réseau d'accès radio, RAN, dans lequel les informations de configuration sont utilisées pour configurer une pluralité de ressources de domaine de fréquence pour le terminal et dans lequel la pluralité de ressources de domaine de fréquence sont dans un premier groupe de ressources de domaine de fréquence configuré par le nœud RAN pour le terminal ;
la réception, au moyen du terminal, de premières informations provenant du nœud RAN, dans lequel les premières informations sont transportées sur un canal de commande de liaison descendante physique, PDCCH, les premières informations comprennent une pluralité de bits d'information et un identifiant de groupe du premier groupe de ressources de domaine de fréquence, la pluralité de bits d'information correspondent respectivement à la pluralité de ressources de domaine de fréquence, et les bits d'information dans les premières informations sont utilisés pour donner l'instruction d'activer ou de désactiver les ressources de domaine de fréquence correspondant aux bits d'information ; et
le passage (S430), au moyen du terminal sur la base des premières informations, d'une ressource de domaine de fréquence dans un état indiqué par un bit d'information correspondant ou le maintien d'un état indiqué par un bit d'information correspondant ;
dans lequel le nœud RAN donne l'instruction, à un moment donné, d'activer ou de désactiver la pluralité de ressources de domaine de fréquence dans le premier groupe de ressources de domaine de fréquence.

6. Procédé selon la revendication 5, dans lequel les premières informations sont des informations de commande au niveau du terminal.

7. Procédé selon la revendication 6, dans lequel les premières informations sont brouillées en utilisant un premier identifiant, et le premier identifiant est utilisé pour indiquer que les premières informations sont spécifiques au terminal et que les premières informations sont utilisées pour activer ou désactiver une ressource de domaine de fréquence.

8. Procédé selon l'une quelconque des revendications 5 à 7, comprenant en outre :
la réception, au moyen du terminal, d'informations d'indication provenant du nœud RAN, dans lequel les informations d'indication sont utilisées pour indiquer une position dans le domaine temporel d'un message de réponse pour les premières informations ; et
le renvoi, au moyen du terminal à la position dans le domaine temporel, du message de réponse pour les premières informations au nœud RAN.

9. Procédé selon la revendication 8, dans lequel, lorsqu'une ressource de domaine de fréquence désactivée existe, le terminal renvoie, à la position dans le domaine temporel, le message de réponse pour les premières informations au nœud RAN.

10. Procédé selon la revendication 8 ou 9, dans lequel les premières informations et les informations d'indication sont transportées dans des informations de commande de liaison descendante, DCI.

11. Procédé selon l'une quelconque des revendications 5 à 10, dans lequel les ressources de domaine de fréquence sont des porteuses composantes secondaires ou des parties de bande passante, BP.

12. Appareil de traitement de ressources de domaine de fréquence (900), comprenant un moyen permettant d'exécuter les étapes selon l'une quelconque des revendications 1 à 4.

13. Support de stockage informatique, dans lequel le support de stockage informatique stocke un programme informatique et, lorsqu'il est exécuté par un processeur, le programme est utilisé pour mettre en œuvre le procédé selon l'une quelconque des revendications 1 à 11.
